(19) Europäisches Patentamt
European Patent Office
Office européen des brevets

(11) **EP 1 789 665 B1**

(12) **EUROPÄISCHE PATENTSCHRIFT**

(45) Veröffentlichungstag und Bekanntmachung des Hinweises auf die Patenterteilung:
**06.08.2008 Patentblatt 2008/32**

(51) Int Cl.:
*F02D 41/00* (2006.01)　　*F02D 41/18* (2006.01)
*F02D 41/14* (2006.01)

(21) Anmeldenummer: **05789533.6**

(22) Anmeldetag: **17.08.2005**

(86) Internationale Anmeldenummer:
**PCT/EP2005/008922**

(87) Internationale Veröffentlichungsnummer:
**WO 2006/024397 (09.03.2006 Gazette 2006/10)**

(54) **VERFAHREN ZUR MODELLBASIERTEN BESTIMMUNG DER WÄHREND EINER ANSAUGPHASE IN DIE ZYLINDERBRENNKAMMER EINER BRENNKRAFTMASCHINE EINSTR\MENDEN FRISCHLUFTMASSE**

METHOD FOR THE MODEL-BASED DETERMINATION OF THE FRESH AIR MASS BEING INGESTED INTO THE CYLINDER COMBUSTION CHAMBER OF AN INTERNAL COMBUSTION ENGINE DURING AN INLET PHASE

PROCEDE POUR DETERMINER SUR LA BASE DE MODELES LA MASSE D'AIR FRAIS ENTRANT DANS LA CHAMBRE DE COMBUSTION DU CYLINDRE D'UN MOTEUR A COMBUSTION INTERNE PENDANT UNE PHASE D'ASPIRATION

(84) Benannte Vertragsstaaten:
**DE FR GB IT**

(30) Priorität: **28.08.2004 DE 102004041708**

(43) Veröffentlichungstag der Anmeldung:
**30.05.2007 Patentblatt 2007/22**

(73) Patentinhaber: **Bayerische Motorenwerke Aktiengesellschaft**
**80809 München (DE)**

(72) Erfinder:
• **KONRAD, Heiko**
　**82065 Baierbrunn (DE)**
• **PATEL, Satish**
　**80636 München (DE)**
• **BOEHM, Martin**
　**80798 München (DE)**

(56) Entgegenhaltungen:
**DE-A1- 10 311 313**　　**DE-A1- 19 753 873**
**DE-B3- 10 316 291**　　**US-A1- 2004 084 015**

**Beschreibung**

Die Erfindung betrifft ein Verfahren zur modellbasierten Bestimmung der während einer Ansaugphase in die Zylinderbrennkammer einer Brennkraftmaschine einströmenden Frischluftmasse. Auf der Basis der ermittelten in die Zylinderbrennkammer einströmenden Frischluftmasse kann nachfolgend dann die in der Brennkammer nach Abschluss der Ansaugphase vorhandene Gesamtfrischluftmenge berechnet werden.

Bei der Steuerung von Brennkraftmaschinen, insbesondere bei der Steuerung von Ottomotoren für Kraftfahrzeuge, spielt die genaue Kenntnis der in die Zylinderbrennkammer(n) einströmenden (bzw. in der Brennkammer nach Beendigung der Ansaugphase vorhandenen) Luftmasse eine entscheidende Rolle. Das liegt darin begründet, dass auf der Basis der in der Brennkammer nach Abschluss der Ansaugphase vorhandenen Luftmasse (Last) wichtige Größen wie Einspritzdauer und Zündwinkel berechnet werden. Fehler in dem Lastsignal führen schnell zu Emissions-, Verbrauchs- und Fahrbarkeitsproblemen. Da in der Praxis am Saugrohrausgang (Übergang zum Zylindereinlass) üblicherweise keine Sensoren zur direkten Messung des Luftmassenstroms vorhanden sind, werden zumeist Lastmodelle verwendet, mit welchen die Last anhand anderer vorhandener Messgrößen berechnet wird. Solche Lastmodelle müssen insbesondere dann sehr genau sein, wenn im gesamten Ansaugsystem kein Luftmassensensor (z.B. HFM-Sensor) vorhanden ist, anhand von dessen Messwerten mittels einem Regler eventuell vorhandene Modellfehler ausgeregelt werden könnten.

Bei der Lastmodellierung wird meist die in den Zylinder einströmende Luftmasse abhängig vom Druck im Saugrohr sowie weiteren Parametern wie Drehzahl der Brennkraftmaschine, Position der Nockenwelle, Temperaturen innerhalb des Ansaug-Verbrennungs-Abgaspfades und/oder der Abgasgegendruck verwendet. Für die Beschreibung der Abhängigkeit der Last von dem vorhandenen Saugrohrdruck wird dabei häufig ein Geradenmodell verwendet, in dem die Last linear mit dem Saugrohrdruck ansteigt (lineares Modell). Die Lage der Geraden wird von den übrigen (vorstehend genannten) Eingangsgrößen bestimmt.

Bei der modellbasierten sogenannten Lasterfassung wird das Lastsignal in der Regel in der Motorsteuerung online mittels des vorhandenen Lastmodells aus einem Wert des Saugrohrdruckes berechnet. Dabei kann der erforderliche Saugrohrdruck gemessen oder ebenfalls modellbasiert ermittelt werden.

Neben der Lasterfassung wird das Lastmodell auch für die sogenannte Laststeuerung verwendet. Bei der Laststeuerung wird aus dem Lastsollwert, der aus der Momentenstruktur (durch den Fahrerwunsch) vorgegeben wird, der Soll-Saugrohrdruck berechnet. Im Falle eines linearen Lastmodells ist dies aufgrund der einfachen Invertierbarkeit von linearen Funktionen problemlos möglich. Der Soll-Saugrohrdruck dient (ggf. zusammen mit dem Lastsollwert und einem eventuell vorhandenen Tankentlüftungsmassenstrom) der Berechnung der Drosselklappen-Sollposition (gedrosselter Betrieb) bzw. der Berechnung der Gaswechselventil-Steuerzeiten und/oder-Hubwege (ungedrosselter Betrieb). Stimmen Soll- und Istwert des Saugrohrdruckes überein, so sind aufgrund der Invertierbarkeit des linearen Lastmodells Lastistwert und Lastsollwert (Füllungsistwert und Füllungssollwert) gleich. Dies ist für das Funktionieren der Momentenstruktur eine unabdingbare Bedingung.

Aus den dargelegten Überlegungen ergibt sich als Voraussetzung für die Verwendung eines linearen Lastmodells zur Bestimmung (und Steuerung) der Last, dass die Zylinderfüllung real linear mit dem Saugrohrdruck ansteigt. Insbesondere bei aufgeladenen direkteinspritzenden Brennkraftmaschinen ist ein linearer Zusammenhang zwischen Saugrohrdruck und Last nicht über den gesamten Druckbereich gegeben. Bei diesen Motoren steigt die Last mit zunehmender "Entdrosselung" (über Drosselklappe und/oder über Gaswechselventilhübe bzw. Gaswechselventilsteuerzeiten) überproportional an. Des Weiteren wird bei aufgeladenen direkteinspritzenden Brennkraftmaschinen in manchen Betriebspunkten ein sogenanntes Überspülen der angesaugten Frischluft absichtlich hervorgerufen, wobei Frischluft dann während der Ansaugphase unverbrannt vom Saugrohr in den Abgastrakt geleitet wird. Ziel hierbei ist es den Luftmassenduchsatz zu erhöhen und einen günstigeren Betriebspunkt des Turboladers zu erreichen. In den Fällen des Überspülens ist daher die angesaugte Frischluftmasse ungleich der nach Abschluss der Ansaugphase in der Zylinderbrennkammer verbleibenden Frischluftmasse.

Im Folgenden wird im Sinne der Erfindung daher unterschieden und von Last gesprochen, wenn die im Zylinder nach Abschluss der Ansaugphase befindliche Frischluftmasse gemeint ist und von angesaugter Frischluftmasse gesprochen, wenn die gesamte, während der Ansaugphase angesaugte Luftmasse gemeint ist.

Sowohl das nichtlineare Ansteigen der Last als auch das Überspülen der angesaugten Frischluftmasse können mit einem linearen Lastmodell nicht ausreichend berücksichtigt werden. Bei turboaufgeladenen direkteinspritzenden Brennkraftmaschinen ergeben sich bei Verwendung eines linearen Modells zur Ermittlung der angesaugten Frischluft bzw. zur Ermittlung der Last große Modellfehler, die anhand von einem Luftmassenmesser und einem Regler permanent ausgeregelt werden müssen. Ein Betrieb ohne Luftmassenmesser ist daher mit einem linearen Modell nicht möglich. Die Verwendung von Luftmassenmesseinrichtungen bei aufgeladenen Brennkraftmaschinen ist allerdings problematisch, da die Anordnung der Messeinrichtung sich äußerst schwierig gestaltet. Wird die Messeinrichtung (z.B. HFM-Sensor) im Hochdruckteil des Saugrohrs (das heißt: nach dem Verdichter) eingebaut, so ist zwar die dynamische Genauigkeit der Messung gut, die Bauteilbelastung (z.B. durch Ölfilmverschmutzung) aber sehr hoch und die Bauteillebensdauer zu gering. Bei einer Anordnung eines HFM-Sensors im Niederdruckteil des Saugrohres (dass heißt: vor dem Verdichter) lässt sich die hohe Bauteilbelastung zwar weitestgehend vermeiden, die dynamische Signalqualität ist allerdings aufgrund des zwischengeschalteten Verdichters sehr schlecht.

Aus der DE 103 11 313 A1 sind ein Verfahren und ein Rechner zur Bestimmung einer Einstellung für den ordnungsgemäßen Betrieb eines Verbrennungsmotors bekannt, wobei in Abhängigkeit von dem Luftdruck in einem Ansaugkrümmer des Motors ein Entwicklungsgesetz für den Luftstrom erstellt werden soll. Dabei wird das Entwicklungsgesetz erstellt, indem aufeinanderfolgend für eine Reihe von Motordrehzahlen bis zu einem vorbestimmten Druckwert eine Reihe von affinen Geraden modelliert wird. Ab dem vorbestimmten Druckschwellenwert wird dann ein korrigiertes Modell verwendet.

In der DE 197 53 873 A1 werden ein Verfahren und eine Vorrichtung zum Betreiben einer Brennkraftmaschine beschrieben, wobei ein Saugrohrdruck erfasst und die Steuerung einer Betriebsgröße der Brennkraftmaschine auf der Basis der aus dem Saugrohrdruck abgeleiteten relativen Luftfüllung vorgenommen wird.

Des Weiteren ist aus der US 2004/0084015 A1 ein Verfahren zur Steuerung einer direkt einspritzenden Brennkraftmaschine bekannt, bei dem in Abhängigkeit von einem gemessene Saugrohrdruck und einem gemessenen Luftmassenstrom die Soll-Stellung einer elektronischen Drosselklappe, der gewünschte Saugrohrdruck und der gewünschte Luftmassenstrom bestimmt und durch Ansteuerung der Drosselklappe eingestellt werden.

Der Erfindung liegt die Aufgabe zugrunde, ein Verfahren zur modellbasierten Bestimmung der während einer Ansaugphase in die Zylinderbrennkammer einer Brennkraftmaschine einströmenden Frischluftmasse anzugeben, welches eine ausreichend genaue Bestimmung der einströmenden Frischluftmasse als auch die Bestimmung der Last auch bei aufgeladenen Brennkraftmaschinen ohne die Verwendung von Luftmassenmesseinrichtungen gewährleistet.

Erfindungsgemäß wird die Aufgabe durch die Gesamtheit der Merkmale des Anspruchs 1 gelöst. Durch die Ermittlung der während der Ansaugphase in die Zylinderbrennkammer einströmenden Frischluftmasse mittels unterschiedlicher Last-Teilmodelle, wobei zumindest über ein erstes Last-Teilmodell mit rein linearer Funktionalität ein erster Frischluftanteil, über ein zweites Last-Teilmodell mit nicht linearer Funktionalität ein zweiter Frischluftanteil und über ein drittes Last-Teilmodell mit ebenfalls nicht linearer Funktionalität ein dritter Frischluftanteil ermittelt wird, wird eine genauere Erfassung der einströmenden Frischluftmasse und damit eine genauere Lasterfassung und Laststeuerung - insbesondere bei aufgeladenen Brennkraftmaschinen - gewährleistet. Immer wenn im Sinne der Erfindung von nicht linearer oder linearer Funktionalität oder nicht linearem und linearem Zusammenhang die Rede ist, bezieht sich das auf den Zusammenhang zwischen der zu ermittelnden in die/den Zylinder einströmenden Frischluftmasse und dem im Saugrohr vorherrschenden Saugrohrdruck.

Bevorzugt findet das Verfahren Anwendung bei aufgeladenen direkteinspritzenden Otto- oder Dieselbrennkraftmaschinen. Mit Vorteil erfolgt bis zu einem ersten Saugrohrdruck (erste Saurohrdruckschwelle: insbesondere $Ps1 \cong 0,52 \times Pa$ ; mit Pa=Abgasgegendruck) die Bestimmung der einströmenden Frischluftmasse ausschließlich über das lineare Last-Teilmodell, und erst ab Erreichen dieser Druckschwelle im Saugrohr erfolgt die Bestimmung der einströmenden Frischluftmasse über eine Kombination der beiden Last-Teilmodelle (lineares Basismodell + nicht lineares Offsetmodell).

Bei einer Bestimmung der einströmenden Luftmasse über eine Kombination der beiden Last-Teilmodelle wird der lineare Anteil über das erste Last-Teilmodell ermittelt und der nichtlineare Anteil separat über das zweite Last-Teilmodell ermittelt und in Form eines Offset auf den linearen Anteil aufaddiert (bevorzugte Ausführung).

Es ist ferner ein drittes Last-Teilmodell vorhanden, welches ebenfalls ein nichtlineares Verhalten aufweist, über das eine dritte Teilluftmasse ermittelt wird. Eine derartige Ausführungsform ist insbesondere in den Fällen von Interesse, in denen während der Ansaugphase ein Überspülen der angesaugten Frischluft erfolgt. Dies ist beispielsweise bei aufgeladenen Brennkraftmaschinen in einigen Betriebspunkten der Fall. Über das dritte Last-Teilmodell wird insbesondere der überspülte Frischluftmassenanteil ermittelt, der dann aus einer ermittelten über die Einlassventile angesaugten Frischluftmasse herausgerechnet werden und so auf die angesaugte, im Zylinder verbleibende zu ermittelnde Gesamtfrischluftmasse (Last) geschlossen werden kann.

Bevorzugt findet das erfindungsgemäße Verfahren Anwendung bei direkteinspritzenden Brennkraftmaschinen mit Ladereinrichtung.

Im Folgenden wird die Erfindung anhand von Figuren näher erläutert. Es zeigen:

| Figur 1a: | ein Last-Teilmodell zur Luftmassen- bzw. zur Lasterfassung mit linearer Funktionalität in schematischer Darstellung - im Folgenden auch Basismodell genannt, |
| --- | --- |
| Figur 1 b: | ein Last-Teilmodell zur Luftmassen- bzw. zur Lasterfassung mit nicht linearer Funktionalität in schematischer Darstellung - im Folgenden auch Offsetmodell für nichtlinearen Lastanteil genannt, und |
| Figur 1 c: | ein Last-Teilmodell zur Luftmassenerfassung des überspülten Luftmassenanteils - im Folgenden auch Offsetmodell für überspülten Luftmassenanteil genannt, |
| Figur 2a-2c: | jeweils in einem Diagramm dargestellt den funktionalen Zusammenhang zwischen Saugrohrdruck und angesaugter Luftmasse gemäß den Figuren 1a-1c, |

Figur 2d:    in einem einzigen Diagramm dargestellt den funktionalen Zusammenhang zwischen Saugrohrdruck und angesaugter Luftmasse basierend auf den, in den Diagrammen gemäß Figur 2a-2c dargestellten Verläufen.

Figur 3:    die schematische Darstellung einer möglichen Laststeuerung in einem Laststeuermodell.

Das erfindungsgemäße Verfahren zur modellbasierten Bestimmung der während einer Ansaugphase in die Zylinderbrennkammer einer Brennkraftmaschine einströmenden Frischluftmasse umfasst zumindest die Ermittlung einer ersten Teilluftmasse LM1 anhand eines ersten Last-Teilmodell Mod_teil1 sowie die Erfassung einer zweiten und einer dritten Teilluftmasse LM2 und LM3 anhand eines zweiten und eines dritten Last-Teilmodells Mod_teil2 und Mod_Teil3. Dabei beschreibt das erste Last-Teilmodell Mod_teil1 einen linearen und das zweite und dritte Last-Teilmodell Mod_teil2 und Mod_Teil3 jeweils einen nicht linearen Zusammenhang zwischen der angesaugten Frischluftmasse LM und dem im Saugrohr herrschenden Saugrohrdruck $p_{saug}$.

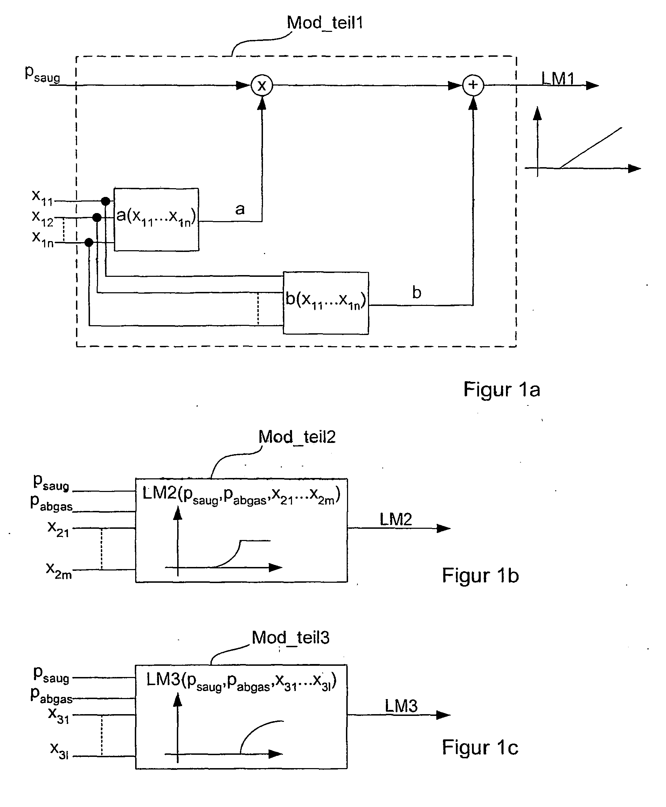

Figur 1a zeigt das erste Last-Teilmodell Mod_teil1 linearer Funktionalität (lineares Basismodell) zur Ermittlung des ersten Luftmassenanteils LM1. Bei dem linearen Basismodell hängt der Luftmassenanteil LM1 linear vom Saugrohrdruck $p_{saug}$ ab.

$$(1) \qquad LM1 = a \times p_{saug} + b$$

Die Geradenparameter a und b sind mit Vorteil in der Motorsteuerung abgelegt - z.B. in Form einer Funktion in Abhängigkeit von Motordrehzahl, Motortemperatur, Abgastemperatur, Temperatur in Ansaugrohr, Abgasgegendruck und/oder der Nockenwellenposition (Einlass bzw. Auslass) - im Folgenden $x_{11}$, ..., $x_{1n}$ genannt (a, b = f ($x_{11}$, ..., $x_{1n}$)).

Figur 1b zeigt in stark vereinfachter Darstellung das zweite Last-Teilmodell Mod_teil2. Dieses umfasst ein Berechnungsmodell zur Nachbildung des Anteils LM2 der angesaugten Luftmasse LM mit nicht linearen Zusammenhang zu dem im Saugrohr vorherrschenden Saugrohrdruck $p_{saug}$. Mit Hilfe des zweiten Last-Teilmodells Mod_teil2 wird vereinfacht folgender Offsetanteil nachgebildet:

$$(2) \qquad LM2 = f(p_{saug}, p_{abgas}, x_{23}, ..., x_{2m})$$

Das Offsetmodell (Mod_teil2) für den nicht linearen Anteil LM2 der nach Abschluss der Ansaugphase in der Zylinderbrennkammer verbleibenden Frischluftmasse beschreibt den überproportionalen Druckanstieg mit zunehmender Entdrosselung. Es wird hier vorzugsweise nur der Offset gegenüber dem linearen Basismodell (Mod_teil1) ermittelt und in der Motorsteuerung abgelegt. Die wichtigsten Eingangsgrößen für das zweite Last-Teilmodell Mod_teil2 sind der Saugrohrdruck $p_{saug}$ ($x_{21}$) und der Abgasgegendruck $p_{abgas}$($x_{22}$). Weitere wesentliche Eingangsgrößen sind insbesondere die Nockenwellenpositionen (Einlass, Auslass), die Motortemperatur, die Temperatur im Saugrohr, die Abgastemperatur, und/oder die Motordrehzahl. Die Eingangsgrößen des zweiten Last-Teilmodells Mod_teil2 sind allgemein mit $x_{21}$, ..., $x_{2m}$ bezeichnet.

Schließlich ist in Figur 1c ein drittes Last-Teilmodell Mod_teil3 veranschaulicht, welches den ebenfalls nichtlinearen Zusammenhang der angesaugten Luftmasse zu dem im Saugrohr herrschenden Druck bezüglich einer dritten Teilluftmasse LM3 nachbildet. Der hierdurch erfasste Luftmassenanteil entspricht der überspülten, während des Ansaugvorgangs angesaugten und nicht im Zylinder zur Verbrennung verbleibenden sondern in den Abgastrakt weitergeleiteten, Luftmasse. Auch in diesem Fall wird vorzugsweise nur der Offset gegenüber dem linearen Basismodell (Mod_teil1) ermittelt und in der Motorsteuerung abgelegt. Die wichtigsten Eingangsgrößen für das dritte Last-Teilmodell Mod_teil3 sind auch hier der Saugrohrdruck $p_{saug}$ ($x_{31}$) und der Abgasgegendruck $p_{abgas}$( $x_{32}$). Weitere Eingangsgrößen für das dritte Last-Teilmodell Mod_teil3 sind vorzugsweise die Nockenwellenpositionen (Einlass, Auslass), die Motortemperatur, die Temperatur im Saugrohr, die Abgastemperatur und/oder die Motordrehzahl. Die Eingangsgrößen für das dritte Last-Teilmodell Mod_teil3 sind allgemein mit $x_{31}$, ..., $x_{3l}$, bezeichnet.

$$(3) \qquad LM3 = f(p_{saug}, p_{abgas}, x_{33}, ..., x_{3l})$$

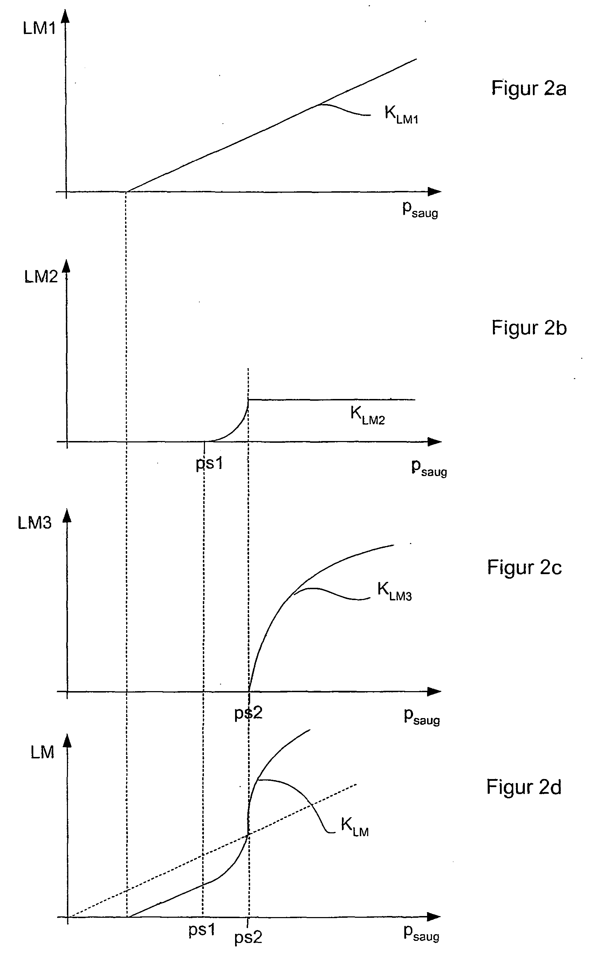

Die funktionalen Zusammenhänge zwischen Saugrohrdruck $p_{saug}$ und dem jeweiligen Luftmassenanteil (LM1, LM2, LM3), analog zu den Figuren 1a-1c, sind in den Figuren 2a-2c dargestellt (Kennlinienverläufe $K_{LM1}$, $K_{LM2}$, $K_{LM3}$). In Figur 2d ist schließlich die Überlagerung der Last-Teilmodell Mod_teil1 mit dem Luftmassenanteil LM1, Mod_teil2 mit dem Luftmassenanteil (Offset_1) LM2 und Mod_teil3 mit dem Luftmassenanteil (Offset_2) LM3 gezeigt ($K_{LM}$). Die gepunktete Linie in Figur 2d stellt den linearen Zusammenhang von angesaugter Luftmasse und Saugrohrdruck ohne Abgasgegendruck und ohne überspülten Anteil dar. Aus dem Diagramm der Figur 2d geht deutlich hervor, dass durch die Addition der beiden ersten Teilluftmassen LM1, LM2 unmittelbar auf die Last geschlossen werden kann (ermittelter Luftmassenanteil entspricht der angeforderten zur Verbrennung benötigten Luftmasse (= Last)), während bei der Addition aller drei Teilluftmassen LM1, LM2, LM3 eine um den überspülten Luftmassenanteil erhöhte Gesamtfrischluftmasse ermittelt wird. Zur Ermittlung der Last muß aus der Kennlinie, in der alle drei Teilluftmassen addiert sind, der überspülte Luftmassenanteil wieder herausgerechnet werden.

Die eigentliche Berechnung der im Zylinder nach Abschluss der Ansaugphase verbleibenden Frischluftmasse erfolgt demnach auf der Basis der ersten beiden Last-Teilmodelle Mod_teil1 und Mod_teil2. Diese Berechnung erfolgt in der Motorsteuerung online und in Echtzeit durch Addition der Teilluftmassen LM1 und LM2.

$$(4) \qquad LM_{zyl} = LM1 + LM2$$

$$(5) \qquad LM_{zyl} = a(x_{11}, ..., x_{2n}) \times p_{saug} + b(x_{11}, ..., x_{1n}) + LM2(p_{saug}, p_{abgas}, x_{23},$$
$$..., x_{2m})$$

Die Eingangsgrößen der beiden Last-Teilmodelle werden hierbei entweder ebenfalls durch jeweilige Modelle nachgebildet oder über geeignete Sensoren gemessen.

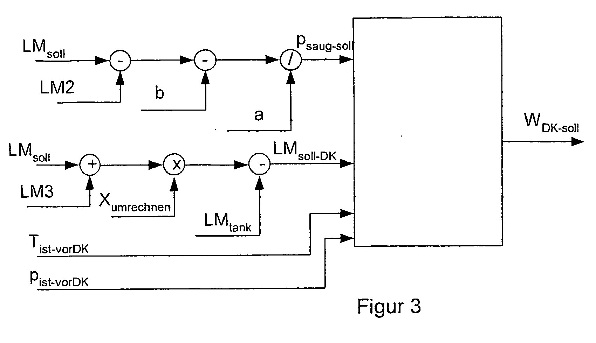

Insbesondere für die eigentliche Laststeuerung ist auch das dritte Last-Teilmodell bzw. die von diesem modellierte Teillast von besonderem Interesse. Ein mögliches Modell zur Laststeuerung ist in Figur 3 veranschaulicht. Ziel der Laststeuerung ist es, einen vorgegebenen Last-Sollwert (aufgrund eines Fahrerwunsches berechnete Luftmasse) so in die Soll-Stellgrößen der Aktuatoren umzurechnen, dass die im Zylinder nach einem Ansaugvorgang verbleibende Frischluftmasse $LM_{zyl}$, gleich dem vorgegebenen Luftmassen-Sollwert ist. Für den Fall eines turboaufgeladenen Ottomotors bei dem unter anderem eine Drosselklappe zur Laststeuerung verwendet wird, ist somit in der Laststeuerung der Sollwert für den Drosselklappenwinkel zu berechnen.

Der Sollwert für den Drosselklappenwinkel kann dabei als Funktion der Größen Solldruck $p_{saug-soll}$ hinter der Drosselklappe, Soll-Luftmassenstrom über die Drosselklappe $LM_{soll}$, Istdruck vor der Drosselklappe $p_{ist-vorDK}$ sowie der Saugrohrtemperatur vor der Drosselklappe $T_{ist-vorDK}$ berechnet werden.

$$(6) \qquad W_{DK-soll} = f(p_{saug-soll}, LM_{soll}, p_{ist-vorDK}, T_{ist-vorDK})$$

Die Eingangsgrößen Saugrohrtemperatur vor der Drosselklappe $T_{ist-vorDK}$ und Istdruck vor der Drosselklappe $p_{ist-vorDK}$ werden auch modellhaft berechnet oder messtechnisch mittels geeigneter Sensorik erfasst. Der Soll-Saugrohrdruck $p_{saug-soll}$ hinter der Drosselklappe ergibt sich aus dem bereits beschriebene Zusammenhang gemäß Gleichung (5) für Luftmassen-Sollwert = Luftmassenistwert der im Zylinder verbleibenden Luftmasse ($LM_{soll} = LM_{zyl}$).

$$(7) \qquad LM_{soll} = [a\,(x_{11}, ..., x_{2n}) \times p_{saug-soll} + b(x_{11}, ..., x_{2n})] + [LM2(p_{saug-soll}, p_{abgas},$$
$$x_{23}, ..., x_{2m})]$$

Da der Geradensteigungsfaktor a und der Geradenanfangswert b selbst nicht vom Saugrohrdruck abhängen, ist eine Invertierung des linearen Last-Teilmodells einfach möglich. Es werden hier einfach die bereits für die Lasterfassung berechneten Parameter a, b verwendet.

Da Gleichung (7) wegen ihres nicht linearen Anteils des zweiten Last-Teilmodells Mod-teil2 nicht direkt nach $p_{soll}$ auflösbar ist, wird an dieser Stelle bevorzugt der aus dem vorangegangenen Abtastschritt noch vorhandene Modellwert zur Berechnung herangezogen.

Bei der Berechnung des Soll-Luftmassenstroms $LM_{sollDK}$ über die Drosselklappe wird von der gesamten über das Einlassventil strömenden Luftmasse LM ausgegangen. Zusätzlich zur im Zylinder verbleibenden Luftmasse $LM_{soll}$ wird auch noch der dritte Luftmassenanteil (überspülter Anteil der angesaugten Luftmasse) ermittelt. Mit einem drehzahlabhängigen Umrechnungsfaktor $X_{umrechnen}$ zwischen Last und Luftmassenstrom und dem Tankentlüftungsmassenstrom ergibt sich der Soll-Luftmassenstrom über die Drosselklappe.

$$(8) \qquad LM_{sollDK} = X_{umrechnen} \times (LM_{soll} + LM3) - LM_{tank}$$

An dieser Stelle wird für den dritten Luftmassenanteil LM3 vorzugsweise der berechnete Wert aus dem vorangegangenen Abtastschritt verwendet. Somit sind alle vorhandenen Eingangsgrößen für die Berechnung des Sollwertes für den Drosselklappenwinkel vorhanden.

Das erfindungsgemäße Verfahren ist nicht auf die beschriebene Ausführungsform beschränkt. Insbesondere sind auch andere Berechnungsmethoden bei der Laststeuerung denkbar in denen eine Berechnung nicht auf der Grundlage des Soll-Saugrohrdruckes aus dem vorangegangenen Abtastschritt, sondern auf der Grundlage eines aktuell berechneten Wertes erfolgt. Erfindungswesentlich ist in erster Linie, dass die Berechnung zur Lasterfassung bzw. zur Frischluftmassenermittlung und die Berechnung zur Laststeuerung auf der Basis von Last-Teilmodellen mit einerseits linearer Funktionalität (Basismodell) und andererseits mit nicht linearer Funktionalität (Offsetmodell) erfolgt. Ferner ist vorgesehen, das Verfahren zur Bestimmung der während einer Ansaugphase in die Zylinderbrennkammer einer Brennkraftmaschine einströmenden Frischluftmasse oder zur Laststeuerung auch bei Brennkraftmaschinen mit Abgasrückführung zu verwenden.

**Patentansprüche**

1. Verfahren zur modellbasierten Bestimmung der während einer Ansaugphase in die Zylinderbrennkammer einer Brennkraftmaschine einströmenden Gesamtfrischluftmasse (LM), mit folgenden Verfahrensschritten:

   - Ermitteln einer ersten Teilluftmasse (LM1) anhand eines ersten Last-Teilmodells (Mod_teil1), wobei das erste Last-Teilmodell (Mod_teil1) ein lineares Verhalten aufweist,
   - Ermitteln einer zweiten Teilluftmasse (LM2) anhand eines zweiten Last-Teilmodells (Mod_teil2), wobei das zweite Last-Teilmodell (Mod_teil2) ein nichtlineares Verhalten aufweist,
   - Ermitteln einer dritten Teilluftmasse (LM3) anhand eines dritten Last-Teilmodells (Mod_teil3), wobei das dritte Last-Teilmodell (Mod_teil3) ein nichtlineares Verhalten aufweist, und
   - Bestimmen der Gesamtluftmasse (LM) durch Addition der zuvor ermittelten Teilluftmassen (LM1, LM2, LM3).

2. Verfahren nach Anspruch 1,
   **dadurch gekennzeichnet, dass** die Ermittlung der ersten Teilluftmasse (LM1) bis Erreichen einer ersten Saugrohrdruckschwelle (ps1) ausschließlich durch das erste Last-Teilmodell (Mod_teil1 ) erfolgt.

3. Verfahren nach Anspruch 1 oder 2,
   **dadurch gekennzeichnet, dass** die Ermittlung der zweiten Teilluftmasse (LM2) ab Erreichen der ersten Saugrohrdruckschwelle (ps1) erfolgt.

4. Verfahren nach einem der vorstehenden Ansprüche,
   **dadurch gekennzeichnet, dass** die Ermittlung der dritten Teilluftmasse (LM3) ab Erreichen einer zweiten Saugrohrdruckschwelle (ps2) erfolgt.

5. Verfahren nach einem der vorstehenden Ansprüche,
   **dadurch gekennzeichnet, dass** über das dritte Last-Teilmodell (Mod_teil3) der bei einem Überspülvorgang der Zylinderbrennkammer auftretende überspülte Luftmassenanteil ermittelt wird.

6. Verfahren zur modellbasierten Laststeuerung für eine aufgeladene Brennkraftmaschine mit Direkteinspritzung, bei dem ein vorgegebener Last-Sollwert derart in Soll-Stellgrößen für Aktuatoren zur Beeinflussung der Luftmassenströmung in eine Zylinderbrennkammer einer Brennkraftmaschine umgerechnet werden, dass die in der Zylinderbrennkammer nach Abschluss der Ansaugphase tatsächlich vorhandene Gesamtfrischluftmasse (LM) gleich dem vorgegebenen Last-Sollwert ist,
   **dadurch gekennzeichnet, dass**
   die in die Zylinderbrennkammer der Brennkraftmaschine einströmende Gesamtfrischluftmasse (LM) gemäß dem Verfahren nach einem der vorstehenden Ansprüche 1 bis 4 ermittelt wird, wobei durch das dritte Lastteilmodell (Mod_teil3) die bei einem Überspülvorgang auftretende dritte Teilluftmasse (LM3) ermittelt wird.

7. Verfahren nach Anspruch 6,

**dadurch gekennzeichnet, dass** die Berechnung des Soll-Luftmassenstroms über einer Drosselklappe auf der Basis der aus dem unmittelbar vorhergehenden Abtastschritt berechneten Teilluftmasse (LM3) erfolgt.

**8.** Verfahren nach einem der vorstehenden Ansprüche 6-7,
**dadurch gekennzeichnet, dass** die Berechnung des Soll-Saurohrdruckes ($p_{saug-soll}$) auf der Basis von dem ersten Last-Teilmodell (Mod_teil1) und dem zweiten Last-Teilmodell (Mod_teil2) erfolgt.

**9.** Verfahren nach einem der vorstehenden Ansprüche 6-8,
**dadurch gekennzeichnet, dass** die Berechnung der Soll-Luftmasse ($LM_{sollDK}$) auf der Basis von dem dritten Last-Teilmodell (Mod_teil3) erfolgt.

## Claims

**1.** A method for the model-based determination of the total mass of fresh air (LM) flowing into the cylinder combustion chamber of an internal combustion engine during an intake phase, with the following steps: determining a first partial air mass (LM1) using a first load partial model (mod_part1), the first load partial model (mod_part1) having a linear behaviour, determining a second partial air mass (LM2) using a second load partial model (mod_part2), the second load partial model (mod_part2) having a non-linear behaviour, determining a third partial air mass (LM3) using a third load partial model (mod_part3), the third load partial model (mod_part3) having a non-linear behaviour, and determining the total air mass (LM) by addition of the previously determined partial air masses (LM1, LM2, LM3).

**2.** A method according to claim 1, **characterised in that** the first partial air mass (LM1) is determined exclusively by the first load partial model (mod_part1) until a first intake manifold pressure threshold (ps1) is reached.

**3.** A method according to either claim 1 or claim 2, **characterised in that** the second partial air mass (LM2) is determined after the first intake manifold pressure threshold (ps1) has been reached.

**4.** A method according to any one of the preceding claims, **characterised in that** the third partial air mass (LM3) is determined after a second intake manifold pressure threshold (ps2) has been reached.

**5.** A method according to any one of the preceding claims, **characterised in that** the air mass proportion which has overflowed during an overflow procedure of the cylinder combustion chamber is determined by means of the third load partial model (mod_part3).

**6.** A method for the model-based load control for a turbocharged internal combustion engine with direct injection, wherein a predetermined load desired value is converted into desired manipulated variables for actuators to influence the air mass flow into a cylinder combustion chamber of an internal combustion engine such that the total mass of fresh air (LM) actually present in the cylinder combustion chamber at the end of the intake phase is the same as the predetermined load desired value, **characterised in that** the total mass of fresh air (LM) flowing into the cylinder combustion chamber of the internal combustion engine is determined by the method according to any one of the preceding claims 1 to 4, the third partial air mass (LM3) which occurs during an overflow procedure being determined by the third load partial model (mod_part3).

**7.** A method according to claim 6, **characterised in that** the desired air mass flow through a throttle valve is calculated on the basis of the partial air mass (LM3) calculated from the directly preceding sampling step.

**8.** A method according to claim 6 or claim 7, **characterised in that** the desired intake manifold pressure ($p_{intake-desired}$) is calculated on the basis of the first load partial model (mod_part1) and the second load partial model (mod_part2).

**9.** A method according to any one of the preceding claims 6 to 8, **characterised in that** the desired air mass ($LM_{desiredDK}$) is calculated on the basis of the third load partial model (mod_part3).

## Revendications

**1.** Procédé pour déterminer sur la base d'un modèle, la masse totale d'air frais (LM) entrant en phase d'aspiration dans la chambre de combustion d'un cylindre d'un moteur à combustion interne, comprenant les étapes de procédé suivantes :

- on détermine une première masse partielle d'air (LM1) à l'aide d'un premier modèle de charge partielle (Mod-teil1), le premier modèle de charge partielle (Mod-teil1) ayant un comportement linéaire,
- on détermine une seconde masse partielle d'air (LM2) à l'aide d'un second modèle de charge partielle (Mod-teil2), ce second modèle de charge partielle (Mod-teil2) ayant un comportement non linéaire,
- on détermine une troisième masse partielle d'air (LM3) à l'aide d'un troisième modèle de charge partielle (Mod-teil3), ce troisième modèle de charge partielle (Mod-teil3) ayant un comportement non linéaire,
- on détermine la masse totale d'air (LM) en additionnant les masses partielles d'air préalablement déterminées (LM1, LM2, LM3).

2. Procédé selon la revendication 1,
**caractérisé en ce qu'**
on détermine la première masse partielle d'air (LM1) jusqu'à atteindre un premier seuil de pression dans la tubulure d'admission (ps1) exclusivement par le premier modèle de charge partielle (Mod-teill).

3. Procédé selon la revendication 1 ou 2,
**caractérisé en ce qu'**
on détermine la seconde masse partielle d'air (LM2) une fois que l'on a atteint le premier seuil de pression de la tubulure d'admission (ps1).

4. Procédé selon l'une des revendications précédentes,
**caractérisé en ce qu'**
on détermine la troisième masse partielle d'air (LM3) une fois que l'on a atteint un second seuil de pression de la tubulure d'admission (ps2).

5. Procédé selon l'une des revendications précédentes,
**caractérisé en ce que**
par le troisième modèle de charge partielle (Mod-teil3) on détermine la composante massique d'air de rinçage produite lors de l'opération de rinçage de la chambre de combustion du cylindre.

6. Procédé de commande de charge basé sur un modèle pour des moteurs à combustion interne suralimentés à injection directe, selon lequel on convertit une valeur de consigne de charge prédéfinie en grandeur de réglage de consigne pour les actionneurs pour influencer le débit massique d'air dans une chambre de combustion d'un cylindre d'un moteur à combustion interne de façon que la masse totale d'air frais (LM) qui est effectivement dans la chambre de combustion du cylindre à la fin de la phase d'admission, est égale à la valeur de consigne charge prédéfinie,
**caractérisé en ce que**
la masse totale d'air frais (LM) qui entre dans la chambre de combustion du cylindre du moteur à combustion interne, se détermine selon le procédé de l'une des revendications 1 à 4 précédentes, et selon le troisième modèle de charge partielle (Mod-teil3) on détermine la troisième masse partielle d'air (LM3) qui se produit lors d'une opération de rinçage.

7. Procédé selon la revendication 6,
**caractérisé en ce que**
le calcul du débit massique d'air de consigne se fait à l'aide d'un volet d'étranglement sur la base de la masse partielle d'air (LM3) calculée au cours de l'étape de détection qui précède directement.

8. Procédé selon l'une des revendications 6 et 7,
**caractérisé en ce que**
le calcul de la pression de consigne dans la tubulure d'admission ($P_{saug\text{-}soll}$), se fait sur la base du premier modèle de charge partielle (Mod-teil1) et du second modèle de charge partielle (Mod-teil2).

9. Procédé selon l'une des revendications précédentes 6 à 8,
**caractérisé en ce que**
le calcul de la masse d'air de consigne ($LM_{sollDK}$) se fait sur la base du troisième modèle de charge partielle (Mod-teil3).

Mod_teil1

$p_{saug}$

$x_{11}$
$x_{12}$
$x_{1n}$

$a(x_{11}...x_{1n})$

a

⊗

$b(x_{11}...x_{1n})$

b

⊕

LM1

Figur 1a

Mod_teil2

$p_{saug}$
$p_{abgas}$
$x_{21}$
$x_{2m}$

$LM2(p_{saug},p_{abgas},x_{21}...x_{2m})$

LM2

Figur 1b

Mod_teil3

$p_{saug}$
$p_{abgas}$
$x_{31}$
$x_{3l}$

$LM3(p_{saug},p_{abgas},x_{31}...x_{3l})$

LM3

Figur 1c

Figur 2a

Figur 2b

Figur 2c

Figur 2d

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10311313 A1
- DE 19753873 A1

- US 20040084015 A1